# FASCICULE DE BREVET EUROPEEN

(11) **EP 3 024 724 B1**
(45) Date de publication et mention de la délivrance du brevet: **22.03.2017**
(21) Numéro de dépôt: 14790142.5
(22) Date de dépôt: 17.07.2014
(51) Int. Cl.: B64C 25/50

(54) **DISPOSITIF DE MONTAGE D'UNE ROULETTE DE QUEUE POUR AVION**
BEFESTIGUNGSVORRICHTUNG FÜR EIN SPORNRAD FÜR EIN FLUGZEUG
MOUNTING DEVICE FOR AN AIRCRAFT TAIL WHEEL

(30) Priorité: 25.07.2013 FR 1357366
(43) Date de publication de la demande: 01.06.2016
(73) Titulaire: Beringer Aero, 05130 Tallard (FR)
(72) Inventeur: BERINGER, Rémi, F-05130 Tallard (FR)
(74) Mandataire: Cabinet Laurent & Charras
(86) Numéro de dépôt international: PCT/FR2014/051838
(87) Numéro de publication internationale: WO 2015/011374

(56) Documents cités:
- DE-U1- 9 103 536
- GB-A- 527 994
- US-A- 2 329 823
- US-A- 2 494 482

## Description

L'invention se rattache au secteur technique de l'aviation et concerne plus particulièrement une roulette de queue.

De manière parfaitement connue pour un homme du métier dans le domaine de l'aviation, un train d'atterrissage est dit classique quand il comporte au moins deux éléments de roulement principaux placés à l'avant du centre de gravité et un élément porteur placé à la queue de l'appareil.

Les éléments de roulement principaux sont généralement constitués par un ou plusieurs trains de roues tandis que l'élément porteur est le plus souvent constitué par une roulette orientable.

Selon l'état de la technique, la roulette est généralement montée libre en rotation dans une fourche que présente un bras, par exemple sous forme d'une lame ressort rendue solidaire de la queue de l'appareil. La fourche est, elle-même, articulée en bout du bras de fixation. L'axe de rotation de la roulette est disposé en arrière de l'axe d'articulation de la fourchette de manière à créer, de façon connue, un phénomène de chasse pour améliorer la maniabilité de l'appareil. En effet, avec un train classique, du fait de la grande distance entre le train principal et la roulette arrière, l'avion est peu maniable au roulage. Il est donc nécessaire, pour tourner court, de bloquer par exemple, une des roues et de laisser la roulette se braquer naturellement à 90°.

Toujours de manière connue, la roulette de queue est assujettie, par exemple par l'intermédiaire d'un palonnier, à des ressorts ou câbles généralement actionnables à partir du poste de pilotage de l'appareil, pour permettre l'orientation de la roulette.

Toutefois, ce type de train classique est particulièrement instable au roulage. En effet, le centre de gravité est situé en arrière du train principal. Aussi, en cas d'une perturbation, résultant, par exemple, d'un vent de travers, le pilote doit, anticiper la sortie de la trajectoire en contrant les effets du vent en agissant sur le palonnier. Cette opération est particulièrement délicate à réaliser, de sorte qu'il peut en résulter très souvent une perte de contrôle de l'avion par un cheval de bois, l'avion pivotant alors sur lui-même dans le sens du vent. La commande par ressorts ou câbles n'est pas assez rigide pour empêcher la roulette de se braquer sous l'effort et ainsi diminuer le rayon de virage.

Il est apparu que l'instabilité augmente avec le carré de la vitesse. Pour tenter de remédier à cet inconvénient, on a proposé d'assujettir la roulette à des moyens aptes à la bloquer dans l'axe de l'avion. Cette solution permet de résoudre le problème de l'instabilité, mais ne permet pas de corriger la trajectoire nécessaire en cas de vent de travers comme indiqué.

Le document GB 527 994 décrit un dispositif de montage d'une roulette de queue pour avion sur un bras de fixation. Le dispositif comprend une platine support présentant, d'une part, un axe d'articulation avec ledit bras et, d'autre part, un axe d'articulation avec une fourche recevant à libre rotation la roulette. L'axe d'articulation de la fourche est positionné au droit d'un axe de rotation de la roulette. Une telle configuration n'est pas entièrement satisfaisante, notamment en cas de vent de travers.

L'invention s'est fixée pour but de remédier à ces inconvénients d'une manière simple, sûre, efficace et rationnelle.

Le problème que se propose de résoudre l'invention est de permettre le guidage précis de l'appareil au décollage et à l'atterrissage et de permettre des manoeuvres serrées en bloquant, par exemple, l'une des roues du train principal.

Pour résoudre un tel problème il a été conçu et mis au point un dispositif de montage d'une roulette de queue pour avion sur un bras de fixation rendu solidaire de ladite queue, lequel dispositif comprend, selon l'invention, une platine support présentant, d'une part, un axe d'articulation avec ledit bras et, d'autre part, un axe d'articulation avec une fourche recevant à libre rotation la roulette. Il résulte donc de ces caractéristiques que la roulette de queue présente une double articulation.

Pour résoudre le problème posé de supprimer ou, à tout le moins, de diminuer de manière importante l'effort parasite résultant d'un effort latéral, par exemple un vent de travers, l'axe d'articulation de la platine avec ledit bras est positionné verticalement au droit de l'axe de rotation de la roulette.

Selon une autre caractéristique avantageuse de l'invention, la platine support présente des moyens de verrouillage de l'axe d'articulation de la fourche.

Il résulte donc de ces caractéristiques qu'en position de déverrouillage de l'axe d'articulation de la fourche, la roulette est libre angulairement lui permettant d'avoir un grand débattement pour permettre à l'appareil un demi-tour possible, une grande maniabilité, une facilité de rangement dans un hangar par exemple.

Dans cette position déverrouillée de la fourche, la platine peut toujours être commandée angulairement par rapport au bras de fixation. En position verrouillée de l'axe d'articulation de la fourche, le problème de l'instabilité est résolu avec un guidage précis au décollage et à l'atterrissage, il n'y a pas d'influence de la force centrifuge sur le braquage de la roulette.

Avantageusement, les moyens de verrouillage de l'axe d'articulation de la fourche sont actionnables à partir du poste de pilotage de l'avion.

Avantageusement, les deux axes d'articulation sont décalés et disposés parallèlement selon un même alignement.

Selon une autre caractéristique, l'axe d'articulation de la fourche est disposé en amont de l'axe d'articulation de la platine pour être positionné à l'intérieur du plan défini par le bras de fixation, à savoir au-dessous du bras.

Pour résoudre le problème de l'instabilité, la platine est assujettie à un palonnier de commande pour être orientée angulairement.

Dans une forme de réalisation, les moyens de verrouillage de la fourche par rapport à la platine sont constitués par un doigt monté à l'encontre d'un ressort de rappel et engagé à libre coulissement dans un logement de la platine en étant apte à être engagé, en position de verrouillage, dans une partie de la fourche, ledit doigt étant relié à un câble de commande actionnable à partir de poste de pilotage.

Avantageusement, les axes sont montés en libre rotation dans la platine support, en relation avec des organes de roulement étanches.

L'invention est exposée ci-après plus en détail à l'aide des figures des dessins annexés dans lesquels :

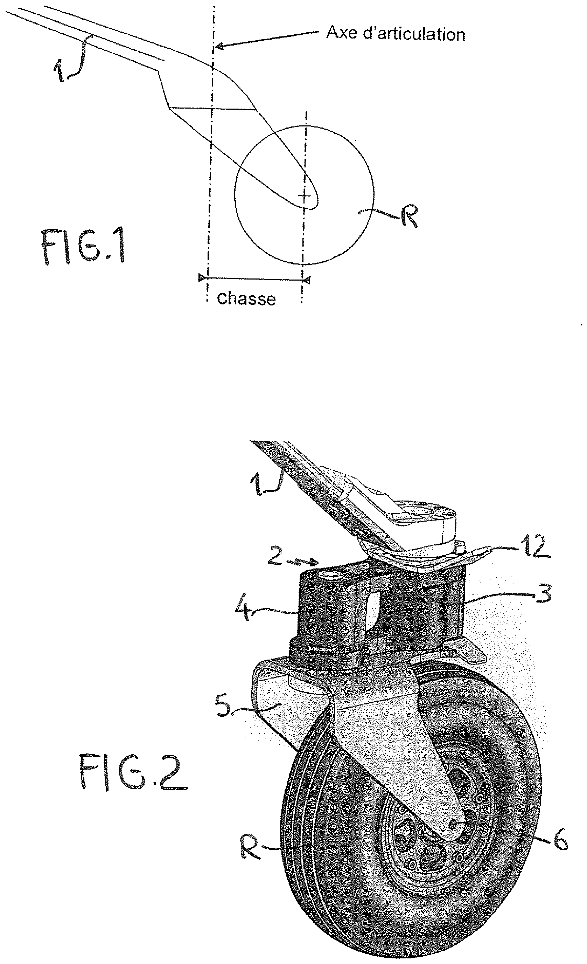

- la figure 1 est une vue à caractère schématique montrant le principe de montage d'une roulette de queue selon l'état antérieur de la technique ;
- la figure 2 est une vue en perspective de l'ensemble du dispositif ;
- la figure 3 est une vue en coupe longitudinale du dispositif en position verrouillée de la fourche par rapport à la platine ;
- la figure 4 est une vue semblable à la figure 3 en position déverrouillée de la fourche par rapport à la platine ;

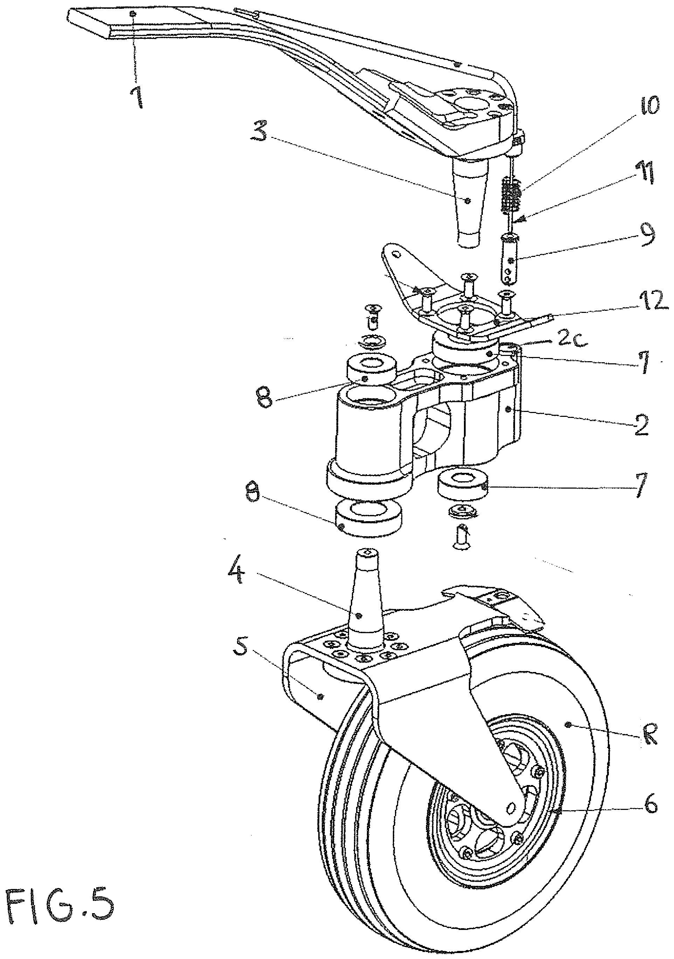

- la figure 5 est une vue en perspective avant montage des principaux éléments du dispositif selon l'invention ;
- la figure 6 est une vue en plan du dispositif en position déverrouillée de la fourche recevant la roulette ;
- la figure 7 est une vue semblable à la figure 6 en position verrouillée de la fourche recevant la roulette.

Selon l'invention, le but recherché est d'assurer le montage d'une roulette de queue (R) sur un bras de fixation (1) solidaire par tout moyen connu et approprié de la queue de l'appareil considéré.

La conception du bras (1) n'est pas décrite en détail car ce bras ne fait pas partie de l'objet spécifique de l'invention. Par exemple, ce bras est réalisé classiquement par une lame ressort.

Selon l'invention, le dispositif de montage comprend une platine support (2) présentant, d'une part, un axe d'articulation (3) avec le bras (1) et, d'autre part, un axe d'articulation (4) avec une fourche (5) recevant à libre rotation, la roulette (R). Il résulte donc de ces dispositions que le montage de la roulette (R) par rapport au bras (1) s'effectue au moyen d'une double articulation avec des avantages importants comme il sera indiqué dans la suite de la description.

Les deux axes (3) et (4) après montage sur la platine (2), sont décalés et disposés parallèlement selon un même alignement. L'axe d'articulation (3) de la platine est disposé au droit de l'axe de rotation (6) de la roulette.

Dans la forme de réalisation illustrée, l'axe d'articulation (3) est fixé par tout moyen connu et approprié, par exemple par vissage, en bout de l'extrémité libre du bras de fixation (1). L'axe (3) est monté libre rotation dans un alésage (2a) de la platine en relation avec des organes de roulement étanches (7) constitués, par exemple, par des roulements à billes.

De la même façon l'axe de rotation (4) de la fourche (5) est accouplé à ladite fourche (5) par tout moyen connu et approprié tel que vissage et est engagé à libre rotation dans un alésage (2b) de la platine (2) en relation avec des organes de roulement étanche (8). Il apparait donc que la platine est montée libre en rotation par rapport au bras d'articulation (1) tandis que la roulette (R) est montée libre en rotation par rapport à la platine (2).

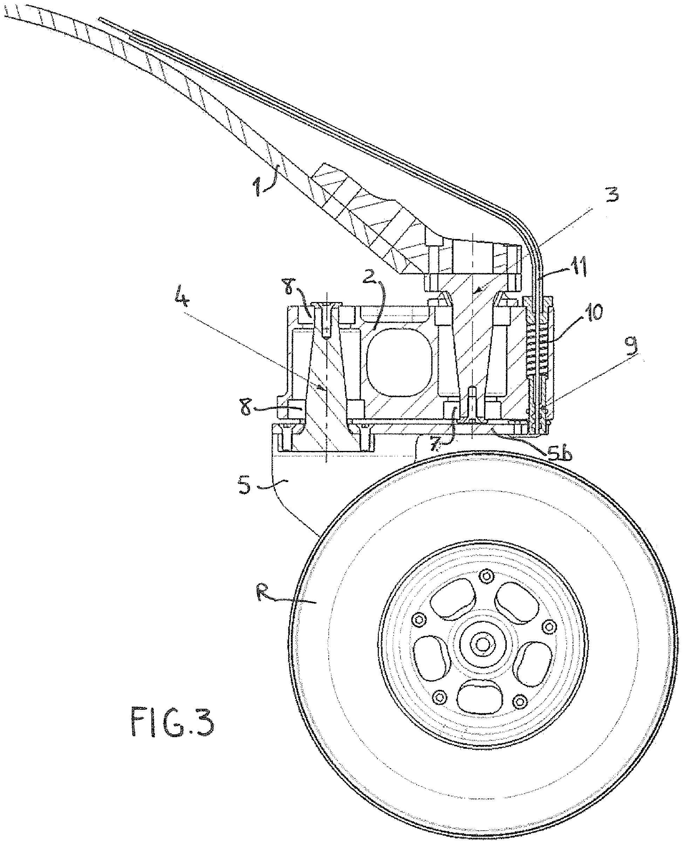

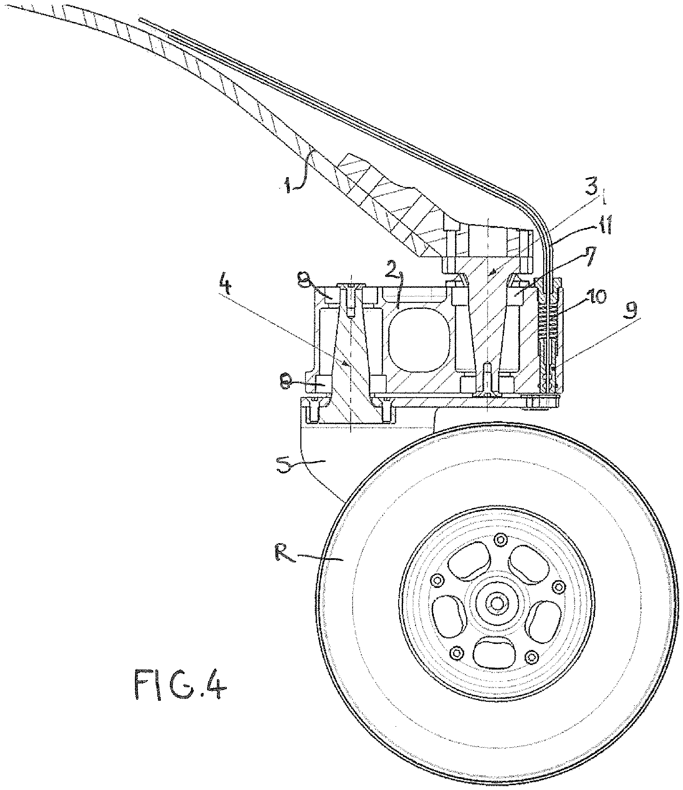

Selon une caractéristique importante, la platine support (2) présente des moyens de verrouillage de l'axe d'articulation (4) de la fourche (5), c'est-à-dire de la roulette (R). Comme le montrent notamment les figures 3 et 4, ces moyens de verrouillage sont constitués par un doigt mobile (9) monté à l'encontre d'un ressort de rappel (10). Le doigt (9) est monté à libre coulissement dans un logement (2c) de la platine (2) en étant apte à être engagé, en position de verrouillage, dans une partie sous forme d'un trou (5a) par exemple, que présente une semelle (5b) de la fourche (5). Le doigt (9) est assujetti à un câble de commande (11) actionnable à partir du poste de pilotage que présente l'avion.

Par ailleurs, la platine (2) est assujettie à un palonnier de commande (12) pour être orientée angulairement, par exemple au moyen d'un système de câbles actionnables également à partir du poste de pilotage.

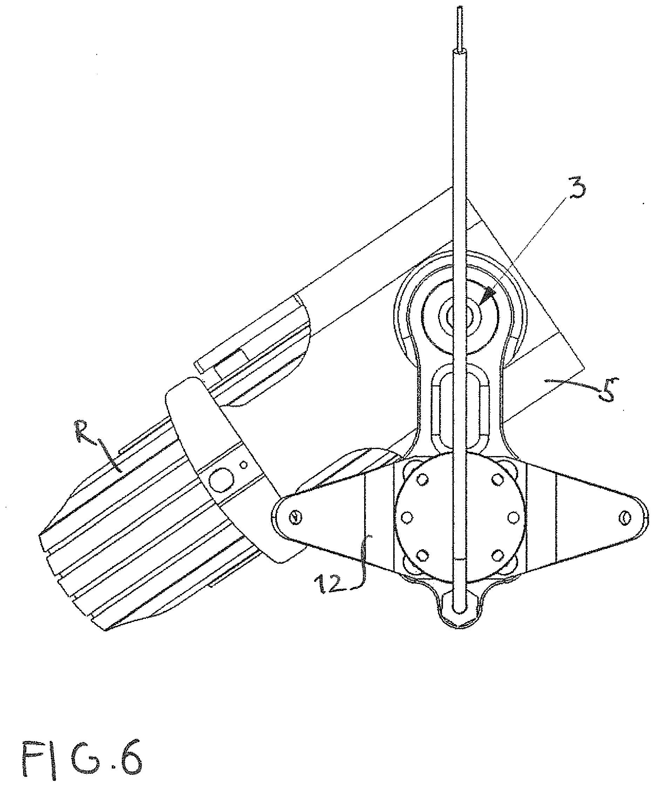

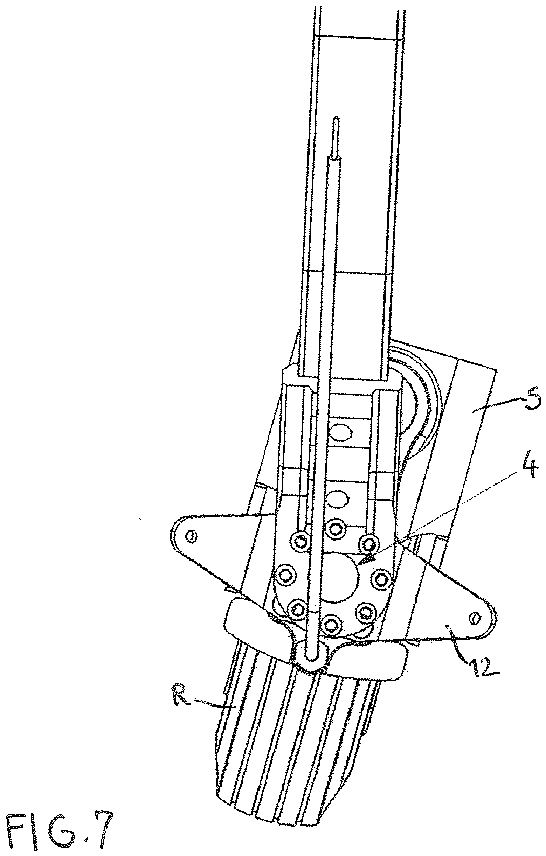

Compte tenu de ces caractéristiques, le fonctionnement est le suivant :
- En position verrouillée de la roulette (R), la trajectoire est parfaitement maîtrisée, cette position verrouillée est illustrée figures 3 et 7. Le doigt (9) est engagé dans la fourche (5) assurant le blocage en rotation de l'axe d'articulation (4). Dans cette position verrouillée, la platine (2) peut être commandée angulairement par rapport à l'axe (3) en agissant, comme indiqué, sur le palonnier de commande (12). Dans cette position verrouillée de la roulette, on note une parfaite stabilité de roulage supprimant tout phénomène de chasse et aucune influence de la force centrifuge sur le braquage de la roulette. On obtient un réglage précis au décollage et à l'atterrissage.
- En position déverrouillée de la roulette (figures 4 et 6) le doigt (9) est escamoté de sorte que l'ensemble de la fourche (5) équipée de la roulette peut tourner librement par rapport à la platine (2). Il en résulte une parfaite maniabilité de l'appareil avec la possibilité de réaliser un demi-tour et une facilité de rangement de l'appareil dans un lieu de stockage tel qu'un hangar.

L'articulation (3) permet donc le guidage précis de l'appareil au décollage et à l'atterrissage tandis que l'articulation (4), après déverrouillage de la fourche recevant la roulette, permet une manoeuvre serrée en bloquant, par exemple, une roue du train principal d'atterrissage.

Les avantages ressortent bien de la description.

## Revendications

1. Dispositif de montage d'une roulette de queue (R) pour avion sur un bras de fixation (1) rendu solidaire de ladite queue, ledit dispositif comprenant une platine support (2) présentant, d'une part, un axe d'articulation (3) avec ledit bras (1) et, d'autre part, un axe d'articulation (4) avec une fourche (5) recevant à libre rotation la roulette (R), **caractérisé en ce que** l'axe d'articulation (3) de la platine (2) avec ledit bras (1) est positionné au droit d'un axe de rotation (6) de la roulette.

2. Dispositif de montage selon la revendication 1, **caractérisé en ce que** la platine support (2) présente des moyens de verrouillage de l'axe d'articulation (4) de la fourche (5).

3. Dispositif de montage selon la revendication 2, **caractérisé en ce que** les moyens de verrouillage de l'axe d'articulation (4) de la fourche (5) sont actionnables à partir d'un poste de pilotage de l'avion.

4. Dispositif de montage selon l'une quelconque des revendications 1 à 3, **caractérisé en ce que** les deux axes (3) et (4) sont décalés et disposés parallèlement selon un même alignement.

5. Dispositif de montage selon l'une quelconque des revendications 1 à 4, **caractérisé en ce que** la platine (2) est assujettie à un palonnier de commande (12) pour être orientée angulairement.

6. Dispositif de montage selon la revendication 3, **caractérisé en ce que** les moyens de verrouillage sont constitués par un doigt (9) monté à l'encontre d'un ressort de rappel (10) monté à libre coulissement dans un logement de la platine (2) en étant apte à être engagé, en position de verrouillage, dans une partie de la fourche (5), ledit doigt (9) étant relié à un câble de commande actionnable à partir du poste de pilotage.

7. Dispositif de montage selon l'une quelconque des revendications 1 à 6, **caractérisé en ce que** les axes (3) et (4) sont montés à libre rotation dans la platine support (2), en relation avec des organes de roulement étanche (7) et (8).

8. Combinaison entre un bras de fixation (1) apte à être rendu solidaire de la queue d'un avion et un dispositif de montage selon l'une quelconque des revendications 1 à 4, **caractérisée en ce que** l'axe d'articulation (4) de la fourche (5) est disposé en amont de l'axe d'articulation (3) de la platine (2) pour être positionné au-dessous du bras de fixation (1).

## Patentansprüche

1. Vorrichtung zum Anbringen eines Spornrads (R) für Flugzeuge an einem Befestigungsarm (1), der mit dem Heck fest verbunden ist, wobei die Vorrichtung eine Trägerplatte (2) umfasst, die einerseits eine Achse (3) zur Anlenkung des Arms (1) und andererseits eine Achse (4) zur Anlenkung einer Gabel (5) aufweist, wobei letztere das Rad (R) frei drehbar aufnimmt, **dadurch gekennzeichnet, dass** Achse (3) zur Anlenkung des Arm (1) an der Platte (2) senkrecht zu einer Drehachse (6) des Rades angeordnet ist.

2. Anbringvorrichtung nach Anspruch 1, **dadurch gekennzeichnet, dass** die Trägerplatte (2) Mittel zum Verriegeln der Achse (4) zur Anlenkung der Gabel (5) aufweist.

3. Anbringvorrichtung nach Anspruch 2, **dadurch gekennzeichnet, dass** die Mittel zum Verriegeln der der Achse (4) zur Anlenkung der Gabel (5) von einem Cockpit des Flugzeugs aus betätigt werden können.

4. Anbringvorrichtung nach einem beliebigen der Ansprüche 1 bis 3, **dadurch gekennzeichnet, dass** die beiden Achsen (3) und (4) dieselbe Ausrichtung aufweisen, wobei sie versetzt zueinander angeordnet sind.

5. Anbringvorrichtung nach einem beliebigen der Ansprüche 1 bis 4, **dadurch gekennzeichnet, dass** die Platte (2) der Steuerung durch einen Seitenhebel (12) unterliegt, um eine Winkelausrichtung zu erfahren.

6. Anbringvorrichtung nach Anspruch 3, **dadurch gekennzeichnet, dass** die Verriegelungsmittel aus einem Stift (9) bestehen, welcher derart angebracht ist, dass er einer Rückholfeder (10) entgegenwirkt, die frei verschiebbar in einer Aussparung der Platte (2) angebracht ist, wobei er in der Verriegelungsposition in einen Abschnitt der Gabel (5) eingreifen kann, wobei der Stift (9) mit einem Steuerseil verbunden ist, das vom Cockpit aus betätigt werden kann.

7. Anbringvorrichtung nach einem beliebigen der Ansprüche 1 bis 6, **dadurch gekennzeichnet, dass** die Achsen (3) und (4) frei drehbar in der Trägerplatte (2) angebracht sind, wobei sie zu abgedichteten Rolllagern (7) und (8) in Beziehung stehen.

8. Kombination aus einem Befestigungsarm (1) der fest mit dem Heck eines Flugzeugs verbunden werden kann, und einer Anbringvorrichtung nach einem beliebigen der Ansprüche 1 bis 4, **dadurch gekennzeichnet, dass** die Achse (4) zur Anlenkung der Gabel (5) vor der Achse (3) zur Anlenkung der Platte (2) angeordnet ist, so dass sie sich unterhalb des Befestigungsarms (1) befindet.

## Claims

1. A mounting device for mounting an aircraft tail wheel (R) on a fastening arm (1) secured to the tail, said mounting device comprising a support block (2) having, firstly, a hinge axis (3) for hinging it to said arm (1) and, secondly, a hinge axis (4) for hinging it to a fork (5) that receives the wheel (R) in freely rotatable manner, **characterized in that** the hinge axis (3) of the support block (2) to said arm (1) is positioned vertically in register with an axis of rotation (6) of the wheel.

2. Mounting device according to claim 1, **characterized in that** the support block (2) has locking means for locking the hinge axis (4) of the fork (5).

3. Mounting device according to claim 2, **characterized in that** the locking means for locking the hinge axis (4) of the fork (5) are operable from a cockpit of the aircraft.

4. Mounting device according to any one of claims 1 to 3, **characterized in that** the two axes (3) and (4) are mutually offset and are disposed parallel to each other along a common alignment.

5. Mounting device according to any one of claims 1 to 4, **characterized in that** the support block (2) is united with a steering control bar (12) so as to be steered angularly.

6. Mounting device according to claim 3, **characterized in that** the locking means are constituted by a finger (9) mounted against a return spring (10) and mounted freely slidable in a housing in the support block (2) while being suitable for being engaged, in the locking position, in a portion of the fork (5), said finger (9) being connected to a control cable operable from the cockpit.

7. Mounting device according to any one of claims 1 to 6, **characterized in that** the axes (3) and (4) are mounted in a freely rotatable manner in the support block (2), in association with sealed rolling bearing members (7) and (8).

8. Combination of a fastening arm (1) suitable for being secured to the tail of an aircraft and a mounting device according to any one of claims 1 to 4, **characterized in that** the hinge axis (4) of the fork (5) is disposed upstream from the hinge axis (3) of the support block (2) so as to be positioned below the fastening arm (1).
